# EUROPÄISCHE PATENTSCHRIFT

(11) **EP 4 257 881 B1**
(45) Veröffentlichungstag und Bekanntmachung des Hinweises auf die Patenterteilung: **23.07.2025**
(21) Anmeldenummer: 23156966.6
(22) Anmeldetag: 16.02.2023
(51) Int. Cl.: F24C 15/00, F21V 33/00, H05B 6/64, F21V 8/00, F21W 131/307

(54) **GARGERÄTELEUCHTE UND GARGERÄT MIT GARGERÄTELEUCHTE**
COOKING DEVICE LIGHT AND COOKING DEVICE WITH COOKING DEVICE LIGHT
LAMPE D'APPAREIL DE CUISSON ET APPAREIL DE CUISSON DOTÉ D'UNE LAMPE D'APPAREIL DE CUISSON

(30) Priorität: 07.04.2022 DE 102022108426
(43) Veröffentlichungstag der Anmeldung: 11.10.2023
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Welslau, Frank, 59757 Arnsberg (DE)
(74) Vertreter: Ostriga Wirths und Vorwerk Patentanwälte PartGmbB

(56) Entgegenhaltungen:
- CN-B- 108 980 917
- CN-U- 210 069 592
- DE-A1- 102014 203 532
- DE-A1- 102018 118 504
- KR-A- 20180 104 401
- US-B1- 10 655 863

## Beschreibung

Die Erfindung betrifft zunächst eine Gargeräteleuchte, insbesondere Leuchte für Backöfen, Mikrowellengargeräte oder Dampfgarer, mit einer Lichtquelle in Form einer Leiterplatte mit darauf angeordneter LED, mit einem Lichtkasten, in welchen das von der LED emittierte Licht eingespeist wird, mit einem Lichtleitstab, der zwischen der Lichtquelle und dem Lichtkasten angeordnet ist und das emittierte Licht von der LED zum Lichtkasten leitet, mit einem Schutzrohr, welches ebenfalls zwischen dem Lichtkasten und der Lichtquelle angeordnet ist und den Lichtleitstab schützend umgibt, mit einem Umfangsspalt zwischen dem Lichtleitstab und dem Schutzrohr, so dass der Lichtleitstab kontaktlos zum Schutzrohr gehalten ist, mit einer Montageeinrichtung, welche die Lichtquelle trägt und ein erstes Ende sowohl des Schutzrohrs als auch des Lichtleitstabes hält, mit wenigstens einem Anordnungsmittel, welches das Schutzrohr und den Lichtleitstab am Lichtkasten festlegt mit wenigstens einem Zentrierglied, welches den Lichtleitstab umgibt und den Lichtleitstab unter Aufrechterhaltung des Umfangsspaltes im Schutzrohr anordnet.

Die Erfindung betrifft auch ein Gargerät mit einer vorgenannten Gargeräteleuchte.

Gargeräteleuchten sind aus dem Stand der Technik in vielfältiger Form bekannt. Es gibt sie unter Nutzung klassischer Glühwendellampen, beispielsweise offenbart in EP 1 811 227 A1. In vermehrtem Maße werden jedoch Gargeräteleuchten unter Nutzung von LED-Technik eingesetzt, wie sie beispielsweise in EP 3 819 545 A1 offenbart ist.

Insbesondere bei gattungsgemäßen Gargeräteleuchten, welche als Lichtquelle auf die LED-Technik setzen, spielt das Temperaturmanagement der Gargeräteleuchte eine erhebliche Rolle. LEDs sind vergleichsweise temperaturempfindlich, so dass ihre Lebensdauer bei Überschreiten einer gewissen Betriebstemperatur drastisch sinkt. Dies steht im Gegensatz zu der Anforderung, dass eine LED-Beleuchtung insbesondere durch den Gargerätenutzer nicht auswechselbar ist und insofern über die gesamte Lebensdauer des Gargerätes funktionsfähig bleiben muss. Dabei hat die Beleuchtungstechnik für Gargeräte zwei Probleme zu lösen. Zum einen muss die beim Betrieb der LED grundsätzlich entstehende Abwärme des Leuchtmittels selbst abgeführt werden. Darüber hinaus erzeugen die Gargeräte, insbesondere Backöfen wie Dampfgarer, jedoch auch moderne Mikrowellengeräte mit Zusatzgarfunktion, wie beispielsweise Grillfunktion, selbst in erheblichem Maße Wärme. Insofern muss hier ein temperaturempfindliches Leuchtmittel in einer Umgebung mit systembedingt vergleichsweise hoher Temperatur eingesetzt werden.

Es wird deshalb vermehrt dazu übergegangen, das LED-Leuchtmittel durch technische Mittel vor der Abwärme des Garraumes zu schützen. Aus EP 3 139 096 B1 ist es beispielsweise bekannt, Hitzeschilde gestaffelt der LED vorzuordnen und so die LED vor Wärmestrahlung zu schützen. Die bereits erwähnte EP 3 819 545 A1 nutzt Lichtleitelemente, namentlich einen Lichtleitstab. Dieser erlaubt es, die LED mit Abstand zum Garraum im Gargerät anzuordnen und das von der LED emittierte Licht über eine größere Distanz in den Garraum einzuleiten.

DE 10 2014 203 532 A1, und KR 2018 0104401 A zeigen eine Gargeräteleuchte, welche einen Lichtleitstab über ein Schutzrohr einem Lichtkasten zuführt.

CN 210 069 592 U, CN 108 980 917 und US 10,655,863 B1 zeigen Gargeräteleuchten mit einem Lichtkasten und einem Lichtleitstab.

In der DE 10 2008 118 504 A1 ist eine vergleichbare Lösung gezeigt. Hier befindet sich die eigentliche Lichtquelle, eine LED-Lampe, außerhalb des Garraumes. Lichtleitstäbe, die parallel zur Garraumwandung und außerhalb der Garraumwandung angeordnet sind, leiten das Licht in ebenfalls außerhalb des Garraumes angeordnete Lichtkästen. Die Lichtkästen selbst münden in Wanddurchbrechungen, nehmen Reflektoren auf oder weisen selbst Reflektoreigenschaften auf. Auf diese Weise wird das über den Lichtleiter in den Lichtkasten eingespeiste Licht über eine Wandöffnung, die ggf. mit einem Schutzglas verschlossen ist, in den Garraum eingespeist. Eine vergleichbare Lösung hat die Anmelderin selbst auf der Internationalen Funkausstellung im Jahr 2015 vorgestellt. Ausgehend von der anmeldereigenen Messevorstellung bzw. der DE 10 2018 118 504 A1 ist es Aufgabe der Erfindung, eine hinsichtlich Temperaturmanagement und Herstellbarkeit verbesserte Gargeräteleuchte zu schaffen.

Gelöst wird diese Aufgabe von einer Gargeräteleuchte mit den Merkmalen des Anspruches 1, insbesondere mit dessen kennzeichnenden Merkmalen, wonach
- das Zentrieglied als Zentrierhülse ausgebildet ist, in welcher der Lichtleitstab einsitzt,
- der Lichtleitkasten eine Einführöffnung aufweist, welche das Zentrierglied aufnimmt,
- das Zentrierglied auch das Anordnungsmittel zur Festlegung des Schutzrohres am Lichtkasten bildet.

Die Erfindung nutzt in vorteilhafter Weise das Zentrierglied zur Anordnung des Lichtstabes am Lichtkasten und vereint so in ein- und demselben Bauteil Funktionen, die im Stand der Technik von verschiedenen Bauteilen realisiert wurden.

Wenn das Zentrierglied darüber hinaus aus einem schlecht wärmeleitenden Material besteht, beispielsweise aus einem Kunststoff oder einem Elastomer oder aber auch aus einem den Lichtleitstab umfangenden Graffitring, wird eine Temperaturentkopplung zwischen dem Lichtleitkasten und dem Wärmeleitstab auf besonders einfache Weise realisiert. Auf diese Weise lässt sich die LED-Lichtquelle gegen Temperatureinwirkungen aus dem Garraum schützen.

Das Zentrierglied kann in einer besonders bevorzugten Ausführungsform zusätzlich eine Dichtfunktion übernehmen. Dabei ist es bevorzugt, wenn das Zentrierglied ein hülsenartiges Dichtelement ist, welches im Umfangsspalt zwischen dem Lichtleitstab und dem Schutzrohr einsitzt und dem Umfangsspalt gegenüber einem durch den Lichtkasten gebildeten Raum abdichtet. Auf diese Weise wird verhindert, dass Gardünste aus dem Garraum über den Lichtkasten in das den Lichtleitstab umgebende Schutzrohr eindringen und sich am Lichtleitstab absetzen. Die in den Kochdünsten enthaltenen Partikel würden durch das Anhaften am Lichtleitstab zu Lichtauskopplungen führen. Die hierdurch entstehenden Lichtverluste können die Effizienz der Gargeräteleuchte erheblich mindern.

Vorgesehen ist ferner, das Schutzrohr mit einer reflektierenden Innenoberfläche zu versehen, um systembedingt aus dem Lichtleitstab ausgekoppeltes Licht in den Lichtleitstab zurückzulenken.

Ist der Lichtleitstab mittels eines Zentriergliedes aus einem dämpfenden Material, beispielsweise aus einem Elastomer, im Lichtkasten festgelegt, wirkt das Zentrierglied darüber hinaus erschütterungsdämpfend. Es schützt somit den Lichtleitstab sowohl auf dem Transportweg als auch im alltäglichen Betrieb vor Impulskräften. Zudem gleicht eine solches Zentrierglied auch unterschiedliche Ausdehnungsverhalten der Materialien unter Wärmeeinfluss aus.

Das Zentrierglied lässt sich besonders einfach am Lichtkasten festlegen, wenn das Zentrierglied Rastmittel, insbesondere eine außenumfänglich umlaufende Rastlippe trägt, mit welcher das Zentrierglied und der Einführöffnung des Lichtkastens verrastet.

Um die Montage der Gargeräteleuchte weiter zu vereinfachen, ist vorgesehen, dass das Zentrierglied auch das Anordnungsmittel zur Festlegung des Schutzrohres am Lichtkasten bildet, insbesondere, wenn das Zentrierglied eine Ringwand ausbildet, welche zur Festlegung am Lichtkasten im Schutzrohr einsitzt und das Schutzrohr zumindest reibschlüssig hält.

Wenn das Zentrierglied nicht nur Anordnungsmittel für den Lichtleitstab am Lichtkasten, sondern auch für das Schutzrohr ist, wirken die oben genannten vielfältigen Vorteile auch im Hinblick auf das Schutzrohr. Sowohl die thermische Entkopplung als auch der Schutz vor Erschütterungen lässt sich so auch für das Schutzrohr realisieren. Auch die differierende Wärmeausdehnung von Lichtleitstab, Schutzrohr und Lichtkasten können durch das Zentrierglied kompensiert werden Darüber hinaus erlaubt insbesondere das Aufsetzen des Schutzrohres auf eine Ringwand und die reibschlüssige Halterung für eine wesentliche Montagevereinfachung. Ein Formschluss zwischen dem Zentrierglied und dem Schutzrohr, beispielsweise durch Rastelemente, ist möglich und vorteilhaft. Darüber hinaus kann das Zentrierglied auch gegenüber dem Schutzrohr dichtend wirken, so dass ein Eindringen von Fluiden zwischen Zentrierglied und Schutzrohrwand ausgeschlossen ist.

Vorgesehen ist ferner, dass das Rastmittel und die Ringwand an einander gegenüberliegenden Enden des Zentriergliedes angeordnet sind.

Um die Montage der Gargeräteleuchte weiter zu vereinfachen, insbesondere eine reine Steckmontage zu gewährleisten, ist vorgesehen, dass die Montageeinrichtung einen hohlzylindrischen Stutzen ausbildet, in dessen Zylinderraum der Lichtleitstab gehalten ist und dessen Zylinderwand vom Schutzrohr zumindest reibschlüssig aufgenommen ist.

Die Erfindung betrifft sodann ein Gargerät mit den Merkmalen des Anspruches 7.

Weitere Vorteile der Erfindung sowie ein besseres Verständnis derselben sind der nachfolgenden Beschreibung eines Ausführungsbeispiels zu entnehmen. Es zeigen:
- Figur 1: die erfindungsgemäße Gargeräteleuchte in Explosionsdarstellung,
- Figur 2: eine erste Teilvergrößerung der Explosionsdarstellung gemäß Figur 1,
- Figur 3: eine zweite Teildarstellung der Explosionsansicht gemäß Figur 1,
- Figur 4: eine Ansicht der erfindungsgemäßen Gargeräteleuchte mit Blickrichtung in einen vom Lichtkasten aufgespannten Raum,
- Figur 5: die Gargeräteleuchte gemäß Figur 4 in Ansicht auf die Rückseite des Lichtkastens,
- Figur 6: eine Teildarstellung der Gargeräteleuchte gemäß Figur 4,
- Figur 7: eine Schnittdarstellung gemäß Schnittlinie VII - VII in Figur 6,
- Figur 8: eine schematische Darstellung eines Gargerätes mit der erfindungsgemäßen Gargeräteleuchte nach Figur 1.

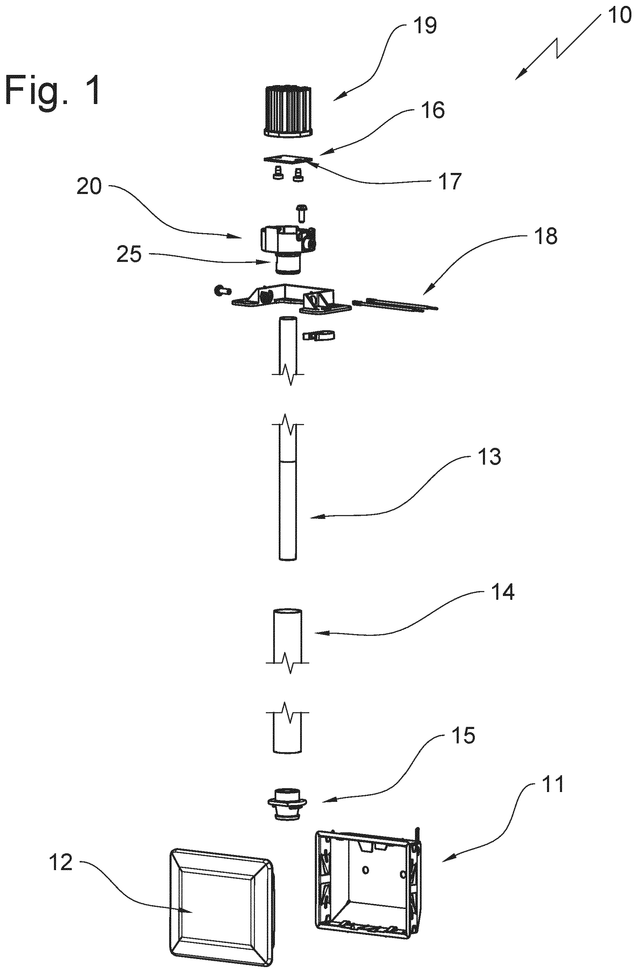

Eine erfindungsgemäße Gargeräteleuchte ist in den Figuren insgesamt mit der Bezugsziffer 10 versehen. Die Gargeräteleuchte 10 ist in Figur 1 in Explosionsdarstellung gezeigt.

Die Gargeräteleuchte 10 umfasst einen Lichtkasten 11 mit Abdeckglas 12, einen Lichtstab 13, welcher in einem Schutzrohr 14 gelagert ist, wobei ein Zentrierglied 15 den Lichtleitstab 13 und das Schutzrohr 14 lichtkastenseitig hält.

Als Lichtquelle 16 dient eine Leiterplatte 17 mit darauf angeordneter LED, die über Anschlussleiter 18 mit Elektrizität versorgt wird und auf einem Kühlkörper 19 angeordnet ist.

Eine insgesamt mit der Bezugsziffer 20 bezeichnete Montageeinrichtung dient der Anordnung der Gargeräteleuchte 10 an einem Gargerät.

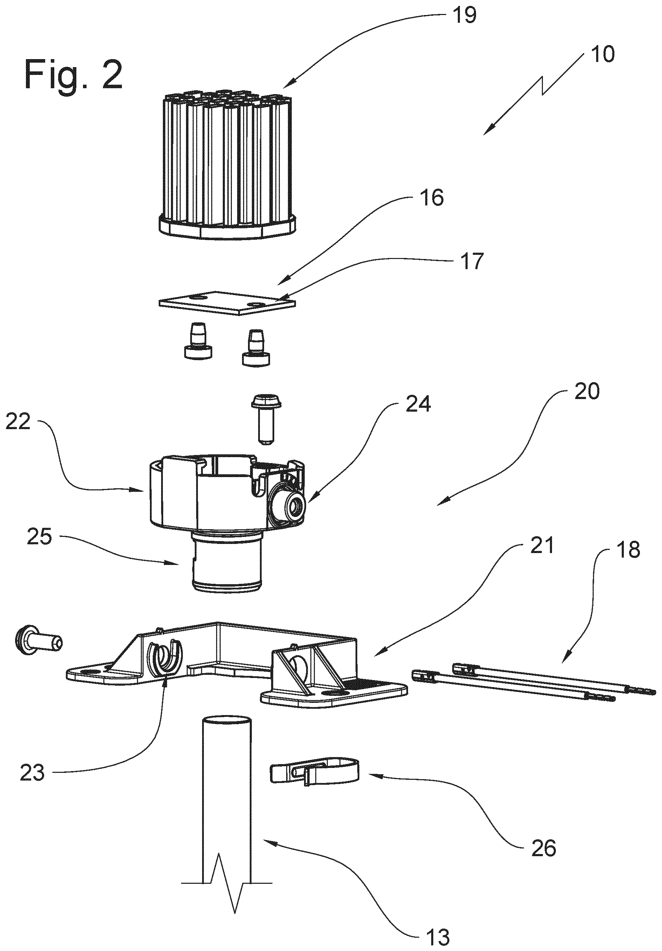

Figur 2 zeigt das lichtquellenseitige Ende der Gargeräteleuchte 10 in Explosionsdarstellung. Dieser ist zunächst zu entnehmen, dass die Montageeinrichtung 20 über eine Montageplatte 21 verfügt, in welcher ein Montagetopf 22 angeordnet ist. Hierzu stehen auf Seiten der Montageplatte 21 Lagerschalen 23 zur Verfügung, in welche Schwenkachsstummel 24 einsitzen, so dass der Montagetopf 22 schwenkbar in der Montageplatte 21 einsitzt. Der Montagetopf 22 nimmt die Leiterplatte 17 auf und hält den Kühlkörper 19. Andererseits verfügt der Montagetopf 22 als Teil der Montageeinrichtung 20 über einen hohlzylindrischen Stutzen 25. In den hohlzylindrischen Stutzen 25 taucht der Lichtleitstab 13 ein und wird dort mittels einer Halteklammer 26 festgelegt.

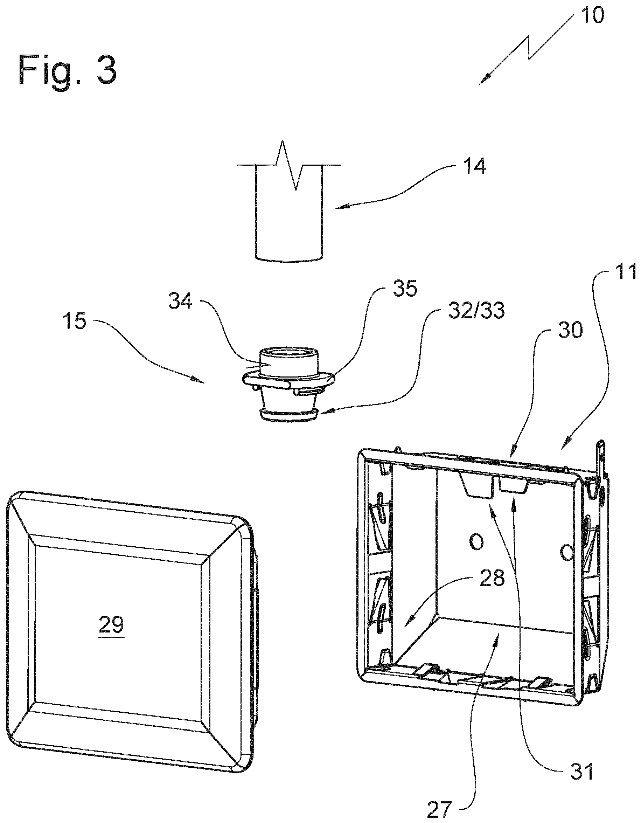

Das lichtkastenseitige Ende der Gargeräteleuchte 10 ist als vergrößerte Explosionsdarstellung in Figur 3 gezeigt. Der Lichtkasten 11 bildet einen Reflektorraum 27 aus, der entweder mit Reflektionsflächen versehen ist oder Reflektormittel aufnehmen kann. Über eine Lichtaustrittsöffnung 28 kann in den Lichtkasten 11 eingeleitetes Licht in ein Gargerät eingespeist werden, wobei zum Schutz des Reflektorraumes 27 die Lichtaustrittsöffnung 28 mit einem Abdeckglas 29 verschließbar ist. Eine Einführöffnung 30 des Lichtkastens 11 ist von zwei Haltezungen 31 flankiert. Das Zentrierglied 15 ist als Zentrierhülse ausgebildet, welche den in Figur 3 nicht dargestellten Lichtleitstab 13 umgibt. Das Zentrierglied 15 verfügt über Rastmittel 32 in Form einer umlaufenden Rastlippe 33 an seinem dem Reflektorraum 27 zugewandten Ende. Das dem Reflektorraum 27 abgewandte Ende bildet eine Ringwand 34, die als Anordnungsmittel für das Schutzrohr 14 dient, welches außenumfänglich reibschlüssig auf die Ringwand 34 aufschiebbar ist. Eine Anschlagscheibe 35 begrenzt den Aufschubweg des Schutzrohres 14 auf die Ringwand 34.

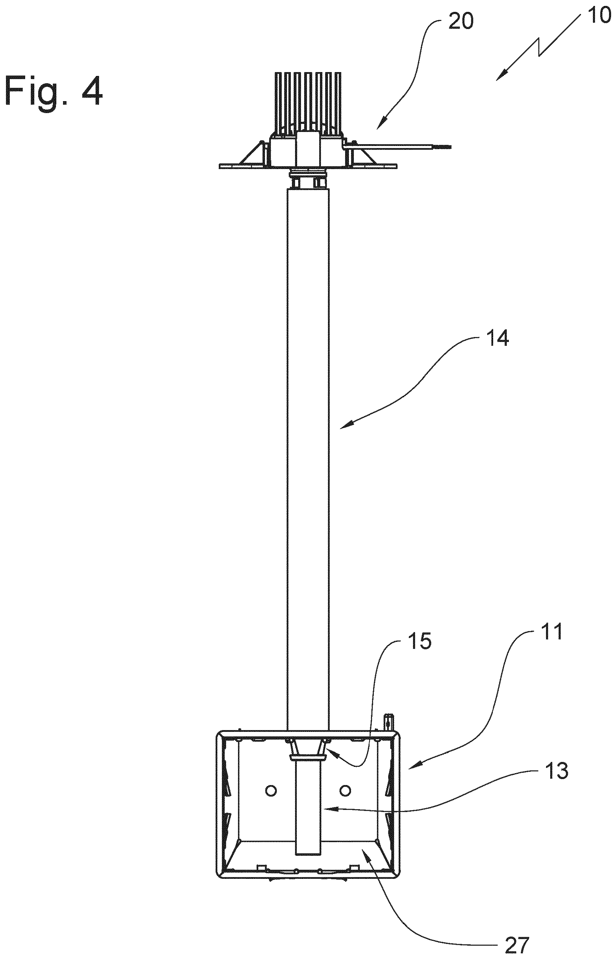

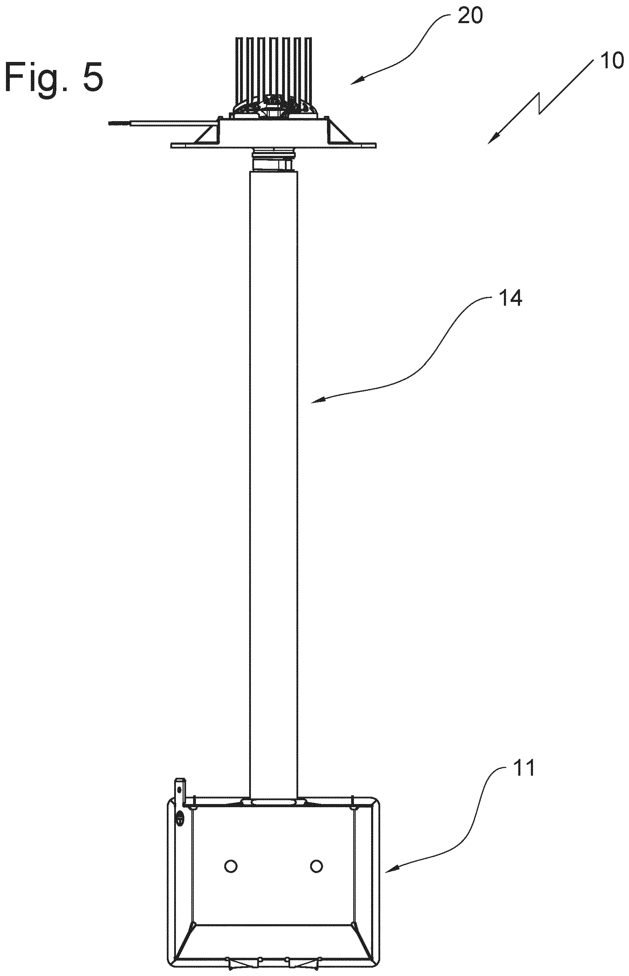

Die Figuren 4 und 5 zeigen nunmehr die zusammengesetzte Gargeräteleuchte 10 in Ansicht auf die Lichtaustrittsöffnung 28 des Lichtkastens 11 (Figur 4) bzw. auf dessen Rückwand (Figur 5).

Beide Figuren zeigen, dass das Schutzrohr 14 sich zwischen dem Lichtkasten 11 und er Montageeinrichtung 20 mit der dort angeordneten Lichtquelle 16 erstreckt und die Lichtquelle 16 somit vom Lichtkasten 11 und dessen Reflektorraum 27 distanziert. Insbesondere anhand von Figur 4 ist ersichtlich, dass der Lichtleitstab 13 aus dem Schutzrohr 14 und durch das Zentrierglied 15 hindurch in den Reflektorraum 27 des Lichtkastens 11 eindringt und im Übrigen sich bis zur Lichtquelle 16 erstreckt und innerhalb des Schutzrohres 14 angeordnet ist.

Mittels des Lichtleitstabes 13 wird somit das von der Lichtquelle 16 emittierte Licht in den Lichtkasten 11 eingespeist, so dass es von dort aus über Reflektoren aus der Lichtaustrittsöffnung 28 herausgeführt und in einen Garraum 40 hineingeworfen werden kann.

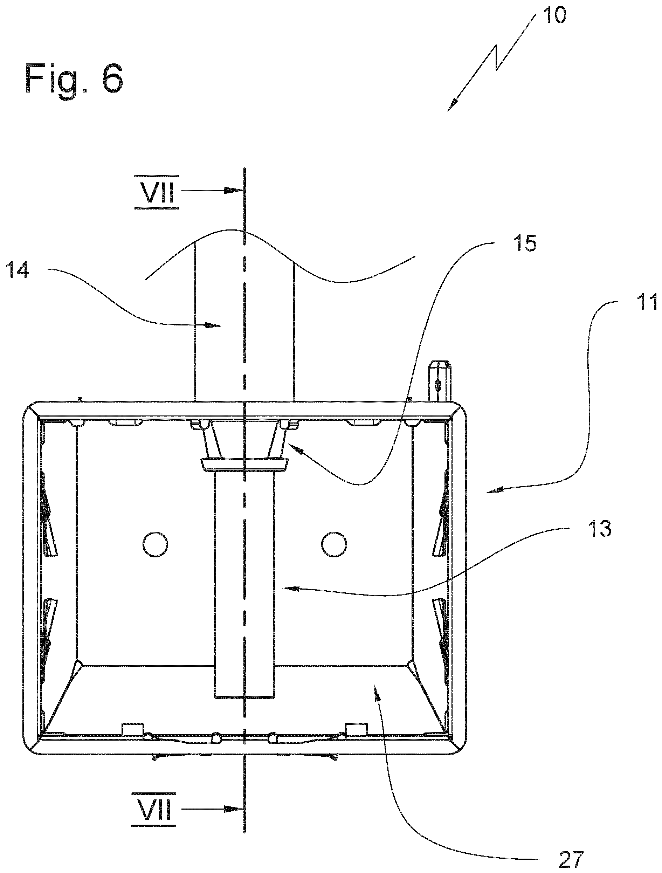

Figur 6 zeigt noch einmal eine Ausschnittsvergrößerung des unteren Endes der Gargeräteleuchte 10 gemäß Figur 4. Zu sehen ist insbesondere noch einmal, wie der Lichtleitstab 13 im Zentrierglied 15 gelagert ist und in den Reflektorraum 27 des Lichtkastens 11 einsitzt.

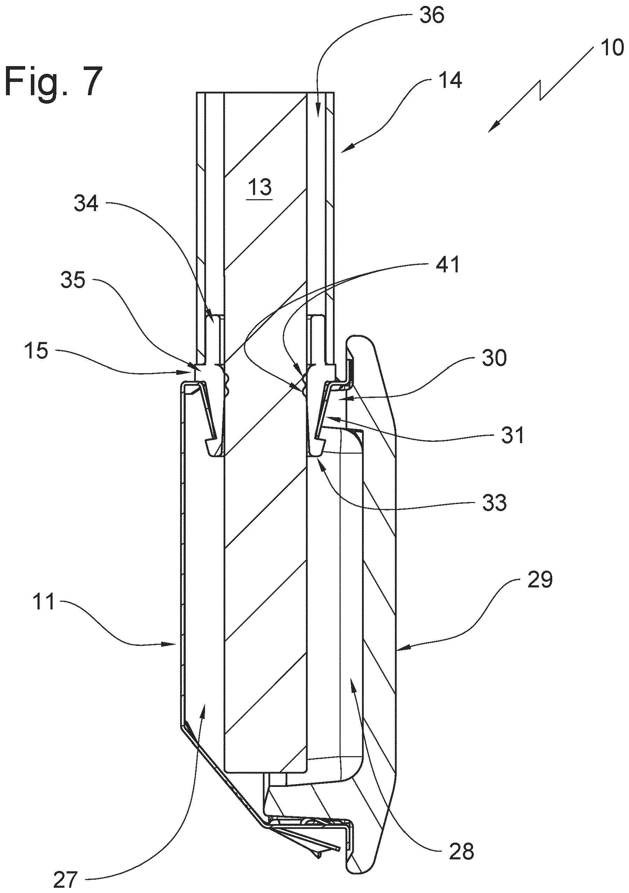

Figur 7 zeigt eine Schnittdarstellung gemäß Linie VII **-** VII in Figur 6.

Anhand von Figur 7 wird nunmehr das Zentrierglied 15 in seinem Aufbau und seiner Funktion noch einmal detailliert beschrieben. Die Teildarstellung der Gargeräteleuchte 10 gemäß Figur 7 zeigt zunächst einen Abschnitt des Schutzrohres 14 sowie des Lichtleitstabes 13. Der Lichtleitstab 13 taucht in den Reflektorraum 27 des Lichtkastens 11 ein. Die Lichtaustrittsöffnung 28 ist vom Abdeckglas 29 lichtdurchlässig verschlossen.

Das Zentrierglied 15 ist ein Hülsenbauteil, welches an seinem dem Lichtkasten 11 bzw. dem Reflektorraum 27 zugewandten Ende mit einer Rastlippe 33 versehen ist, die die Haltezungen 31 des Lichtkastens 11 rastend hintergreift. Auf diese Weise ist das Zentrierglied 15 gegen ein Herausziehen aus dem Lichtkasten 11 geschützt. Das Zentrierglied 15 sitzt darüber hinaus mit seiner sich radial vollumfänglich um das Hülsenbauteil herum angeordnete Anschlagscheibe 35 außen auf der den Lichtkasten 11 bildenden Wand auf und ist so gegen ein weiteres eintauchen in den Lichtkasten 11 bzw. den Reflektorraum 27 gesichert.

Es lässt sich also zunächst festhalten, dass das Zentrierglied 15 auf besonders einfache Weise am Lichtkasten 11 festlegbar ist, indem es in eine Einführöffnung 30 der Lichtkastenwandung eingeschoben wird, bis die Anschlagscheibe 35 den Einschubweg begrenzt und gleichzeitig die Rastlippe 33 die Haltezungen 31 des Lichtkastens 11 hintergreifen.

Figur 7 ist sodann zu entnehmen, dass das Zentrierglied 15 in seinem hohlzylindrischen Innenraum den Lichtleitstab 13 hält und über einen Umfangsspalt 36 sicher von der Wand des Schutzrohres 14 beabstandet. eine Berührung des Lichtleitstabes 13 und des Schutzrohres 14, welche zu einem Auskoppeln von Licht aus dem Lichtleitstab 13 führen würde und eventuell auch zur Beschädigung des Lichtleitstabes 13 führen könnte, wird durch das Zentrierglied 15 sicher vermieden. Darüber hinaus hält das Zentrierglied 15 den Lichtleitstab 13 sicher am Lichtkasten 11 angeordnet.

Das Zentrierglied 15 hat in seiner in Figur 7 konkret dargestellten Ausführungsform darüber hinaus eine Dichtfunktion. Diese wird einerseits durch ein im Wesentlichen spaltloses Anliegen der Hülseninnenwand am Lichtleitstab 13 sichergestellt. Darüber hinaus verfügt das Zentrierglied 15 über wenigstens eine, im Ausführungsbeispiel tatsächlich zwei innen umfängliche und zum Lichtleitstab 13 weisende Dichtlippen 41, welche an der Außenumfangsfläche des Lichtleitstabes 13 anliegen. Die Dichtlippen 41 haben einerseits den Vorteil, eventuelle Maß- und Fertigungstoleranzen ausgleichen zu können. Darüber hinaus besteht grundsätzlich die Möglichkeit, das Zentrierglied 15 in einem ZweiKomponenten-Spritzgieß-Verfahren herzustellen und so elastische Dichtlippen 41 an einem im Übrigen aus Kunststoff bestehenden Körper anzuspritzen und so die Dichtfunktion zu realisieren.

Auch ist es theoretisch denkbar, das Zentrierglied 15 aus einem keramischen oder metallischen Werkstoff herzustellen und innenumfänglich elastische Dichtlippen 41 anzusetzen.

Die Bildung des Zentriergliedes 15 aus einem thermisch schlecht leitenden Material wie Kunststoff oder Keramik ist bevorzugt, da auf diese Weise eine thermische Entkopplung zwischen dem Lichtleitstab 13 und dem Lichtkasten 11 realisierbar ist.

Das Zentrierglied 15 verfügt darüber hinaus über eine axial gerichtete, vom Zentrierkasten 11 wegweisende Ringwand 34, die der Anschlagscheibe 35 entspringt und vom lichtkastenseitigen Ende des Schutzrohres 14 aufgenommen ist. Das Schutzrohr 14 umschließt die Ringwand 34 wenigstens reibschlüssig und wird auf diese Weise am Lichtkasten 11 festgelegt. Eine Formschlussverbindung über Rastmittel oder Rastkonturen zur zusätzlichen Sicherung des Schutzrohres 14 auf dem Zentrierglied 15 ist vorstellbar.

Die lichtkastenseitige Stirnfläche des Schutzrohres 14 liegt an der Anschlagscheibe 35 an, welche somit den Aufschubweg des Schutzrohres 14 auf die Ringwand 34 begrenzt. Gleichzeitig beabstandet die Anschlagscheibe 35 das Schutzrohr 14 von der Lichtkastenwand, so dass hier das Zentrierglied 15 - so es aus einem geeigneten Material besteht - das Schutzrohr 14 vom Lichtkasten 11 wärmetechnisch entkoppelt.

Auch kann die Ringwand 34 über geeignete Dichtkonturen bzw. eine entsprechende Materialwahl den Umfangsspalt 36 gegenüber der Außenumgebung abdichten, indem sie spaltfrei am Schutzrohr 14 anliegt. auf diese Weise wird verhindert, dass Fluide oder Fremdkörper in den Umfangsspalt 36 eindringen können.

Die Dichtfunktion des Zentriergliedes 15 ist deshalb eine der bevorzugten Eigenschaften, da der Eintritt von Fremdkörpern oder Kochdünsten in den Ringspalt 36 zu einer Anhaftung von Partikeln am Lichtleitstab 13 führen kann. Hierdurch erfolgt eine Lichtauskopplung aus dem Lichtstab 13, was die Effizienz der Gargeräteleuchte 10 insgesamt vermindert.

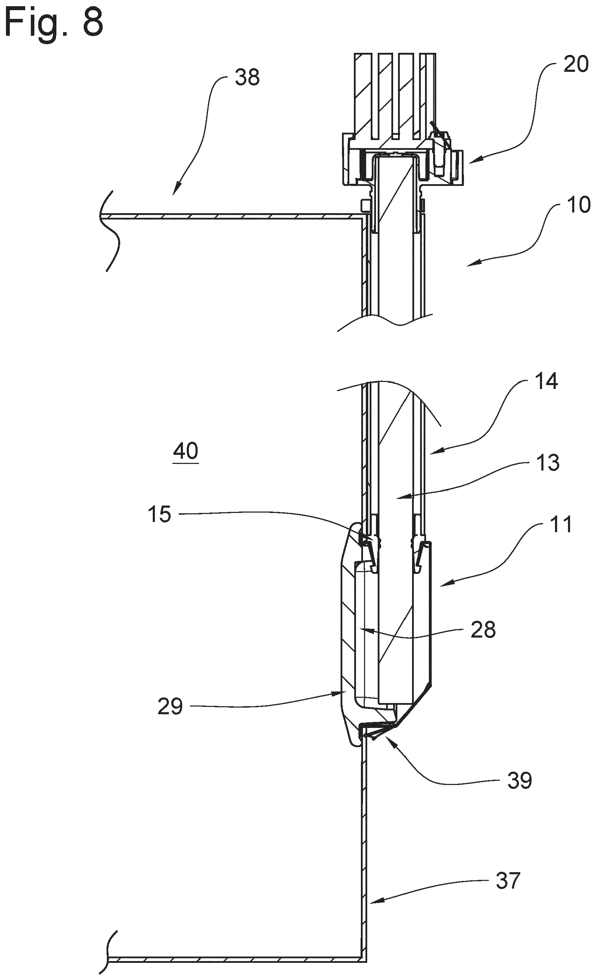

Figur 8 zeigt nunmehr schematisch die Anordnung der erfindungsgemäßen Gargeräteleuchte 10 an einer Garraumwand 37 eines Gargerätes 38. Die Garraumwand 37 verfügt über einen Wandausschnitt 39, in welchem der Lichtkasten 11 gehalten ist, wobei die Lichtaustrittsöffnung 28 des Lichtkastens 11 dem Garraum 40 des Gargerätes 38 zugewandt ist. Auf diese Weise kann Licht der Gargeräteleuchte durch die Lichtaustrittsöffnung 28 und deren Abdeckglas 29 dem Garraum 40 zugeführt werden.

An der Garraumaußenseite ist entlang einer nicht näher bezeichneten Garraumseitenwand das Schutzrohr 14 mit dem innen liegenden Lichtleitstab 13 geführt und an seinem dem Lichtkasten 11 abgewandten Ende in der Montageeinrichtung 20 gehalten.

Die Montageeinrichtung 20 ihrerseits ist an einem geeigneten Gegenstück des Gargerätes 38 befestigt. Auf diese Weise ist die Gargeräteleuchte 10 sicher im Gargerät 38 angeordnet und gehalten, wobei die Lichtquelle 16 ausreichend beabstandet und unter anderem durch das Zentrierglied 15 optimal wärmetechnisch entkoppelt ist. Eine übermäßige Wärmebelastung der Lichtquelle 16 durch die im Garraum 40 entstehende Wärme wird auf diese Weise sicher vermieden.

Insgesamt stellt die Erfindung eine Gargeräteleuchte 10 bereit, die durch ein Zentrierglied 15 vorteilhaft ausgestaltet ist. Das Zentrierglied 15 übernimmt neben der Zentrierfunktion des Lichtleitstabes 13 im Schutzrohr 14 eine Vielzahl weiterer wichtiger Funktionen und vereint auf diese Weise eine Reihe von bislang separaten Bauteilen in sich. So dient das Zentrierglied 15 der Halterung des Lichtstabes 13 wie auch des Schutzrohres 14 am Lichtkasten 11, es dienst der wärmetechnischen Entkopplung sowohl des Lichtleitstabes 13 als auch des Schutzrohres 14 vom Lichtkasten 11. Das Zentrierglied 15 übernimmt darüber hinaus sowohl im Hinblick auf das Schutzrohr 14 als auch den Lichtleitstab 13 jeweils eine Dichtfunktion, die den im Schutzrohr 14 einsitzenden Lichtleitstab 13 vor Verschmutzung, hierdurch bedingte Lichtauskopplung und eine daraus resultierende Effizienzminderung schützt.

### Bezugszeichenliste

- 10: Gargeräteleuchte
- 11: Lichtkasten
- 12: Abdeckglas
- 13: Lichtleitstab
- 14: Schutzrohr
- 15: Zentrierglied
- 16: Lichtquelle
- 17: Leiterplatte
- 18: Anschlussleiter
- 19: Kühlkörper
- 20: Montageeinrichtung
- 21: Montageplatte
- 22: Montagetopf
- 23: Lagerschale
- 24: Schwenkachsstümmel
- 25: hohlzylindrischer Stutzen
- 26: Halteklammer
- 27: Reflektorraum
- 28: Lichtaustrittsöffnung
- 29: Abdeckglas
- 30: Einführöffnung
- 31: Haltezunge
- 32: Rastmittel
- 33: Rastlippe
- 34: Ringwand
- 35: Anschlagscheibe
- 36: Umfangsspalt
- 37: Garraumwand
- 38: Gargerät
- 39: Wandausschnitt
- 40: Garraum
- 41: Dichtlippen

## Patentansprüche

1. Gargeräteleuchte (10), insbesondere Leuchte für Backöfen, Mikrowellengargeräte oder Dampfgarer,
- mit einer Lichtquelle (16) in Form einer Leiterplatte (17) mit darauf angeordneter LED,
- mit einem Lichtkasten (11), in welchen das von der LED emittierte Licht eingespeist wird,
- mit einem Lichtleitstab (13), der zwischen der Lichtquelle (16) und dem Lichtkasten (11) angeordnet ist und das emittierte Licht von der LED zum Lichtkasten (11) leitet,
- mit einem Schutzrohr (14), welches ebenfalls zwischen dem Lichtkasten (11) und der Lichtquelle (16) angeordnet ist und den Lichtleitstab (13) schützend umgibt,
- mit einem Umfangsspalt (36) zwischen dem Lichtleitstab (13) und dem Schutzrohr (14), so dass der Lichtleitstab (13) kontaktlos zum Schutzrohr (14) gehalten ist,
- mit einer Montageeinrichtung (20), welche die Lichtquelle (16) trägt und ein erstes Ende sowohl des Schutzrohrs (14) als auch des Lichtleitstabes (13) hält,
- mit wenigstens einem Zentrierglied (15), welches den Lichtleitstab (13) umgibt und den Lichtleitstab (13) unter Aufrechterhaltung des Umfangsspaltes (36) im Schutzrohr (14) anordnet,
- mit wenigstens einem Anordnungsmittel, welches das Schutzrohr (14) und den Lichtleitstab (13) am Lichtkasten (11) festlegt, wobei
- das Zentrierglied (15) ein Anordnungsmittel bildet, mittels dessen der Lichtleitstab (13) am Lichtkasten (11) angeordnet ist,
**dadurch gekennzeichnet, dass**
- das Zentrieglied (15) als Zentrierhülse ausgebildet ist, in welcher der Lichtleitstab (13) einsitzt,
- der Lichtkasten (11) eine Einführöffnung (30) aufweist, welche das Zentrierglied (15) aufnimmt,
- das Zentrierglied (15) auch das Anordnungsmittel zur Festlegung des Schutzrohres (14) am Lichtkasten (11) bildet.

2. Gargeräteleuchte (10) nach Anspruch 1, **dadurch gekennzeichnet, dass** das Zentrierglied (15) ein hülsenartiges Dichtelement ist, welches den Umfangsspalt (36) zwischen dem Lichtleitstab (13) und dem Schutzrohr (14) gegenüber einem durch den Lichtkasten (11) gebildeten Raum abdichtet.

3. Gargeräteleuchte (10) nach Anspruch 1, **dadurch gekennzeichnet, dass** das Zentrierglied (15) Rastmittel (32), insbesondere eine außenumfänglich umlaufende Rastlippe (33) trägt, mit welcher das Zentrierglied (15) und der Einführöffnung (30) des Lichtkastens (11) verrastet.

4. Gargeräteleuchte (10) nach Anspruch 1, **dadurch gekennzeichnet, dass** das Zentrierglied (15) eine Ringwand (34) ausbildet, welche zur Festlegung am Lichtkasten (11) im Schutzrohr (14) einsitzt und das Schutzrohr (14) zumindest reibschlüssig hält.

5. Gargeräteleuchte (10) nach Anspruch 3 und 4, **dadurch gekennzeichnet, dass** das Rastmittel (32) und die Ringwand (34) an einander gegenüberliegenden Enden des Zentriergliedes (15) angeordnet sind.

6. Gargeräteleuchte (10) nach einem der vorhergehenden Ansprüche, **dadurch gekennzeichnet, dass** die Montageeinrichtung (20) einen hohlzylindrischen Stutzen (25) ausbildet, in dessen Zylinderraum der Lichtleitstab (13) gehalten ist und dessen Zylinderwand vom Schutzrohr (14) zumindest reibschlüssig aufgenommen ist.

7. Gargerät (38)
- mit einem Garraum (40), der von einer Garraumwandung (37) umgeben ist,
- mit einer Öffnung in der Garraumwandung (37), die der Aufnahme einer Gargeräteleuchte (10) dient,
- mit einer Gargeräteleuchte (10) nach einem der Ansprüche 1 bis 6, **dadurch gekennzeichnet, dass** der Lichtkasten (11) an der Öffnung der Garraumwandung (37) angeordnet ist und das Schutzrohr (14) außerhalb des Garraumes (40) entlang der Garraumwandung (37) geführt ist.

## Claims

1. Cooking device light (10), in particular light for ovens, microwave cooking devices or steam cookers,
- having a light source (16) in the form of a printed circuit board (17) with an LED arranged on it,
- having a light box (11), into which the light emitted by the LED is fed,
- having a light guide rod (13), which is arranged between the light source (16) and the light box (11) and guides the emitted light from the LED to the light box (11),
- having a protective tube (14), which is also arranged between the light box (11) and the light source (16) and surrounds the light guide rod (13) in a protective manner,
- having a peripheral gap (36) between the light guide rod (13) and the protective tube (14), such that the light guide rod (13) is held without touching the protective tube (14),
- having a mounting device (20), which supports the light source (16) and holds a first end both of the protective tube (14) and of the light guide rod (13),
- having at least one centring member (15), which surrounds the light guide rod (13) and arranges the light guide rod (13) in the protective tube (14) while maintaining the peripheral gap (36),
- having at least one arranging means, which fixes the protective tube (14) and the light guide rod (13) on the light box (11), wherein
- the centring member (15) forms an arranging means, by means of which the light guide rod (13) is arranged on the light box (11),
**characterised in that**
- the centring member (15) is formed as a centring sleeve, in which the light guide rod (13) rests,
- the light box (11) has an insertion opening (30), which receives the centring member (15),
- the centring member (15) also forms the arranging means for fixing the protective tube (14) on the light box (11).

2. Cooking device light (10) according to claim 1, **characterised in that** the centring member (15) is a sleeve-like sealing element, which seals the peripheral gap (36) between the light guide rod (13) and the protective tube (14) with respect to a chamber formed by the light box (11).

3. Cooking device light (10) according to claim 1, **characterised in that** the centring member (15) supports latching means (32), in particular an outer peripheral latching lip (33), with which the centring member (15) and the insertion opening (30) of the light box (11) latch.

4. Cooking device light (10) according to claim 1, **characterised in that** the centring member (15) forms an annular wall (34), which rests in the protective tube (14) for fixing on the light box (11) and holds the protective tube (14) at least in a frictionally engaged manner.

5. Cooking device light (10) according to claim 3 and 4, **characterised in that** the latching means (32) and the annular wall (34) are arranged on opposite ends of the centring member (15).

6. Cooking device light (10) according to one of the preceding claims, **characterised in that** the mounting device (20) forms a hollow cylindrical connecting piece (25), in the cylinder chamber of which the light guide rod (13) is held and whose cylinder wall is received by the protective tube (14) at least in a frictionally engaged manner.

7. Cooking device (38)
- having a cooking chamber (40), which is surrounded by a cooking chamber wall (37),
- having an opening in the cooking chamber wall (37), which serves to receive a cooking device light (10),
- having a cooking device light (10) according to one of claims 1 to 6, **characterised in that** the light box (11) is arranged at the opening of the cooking device wall (37), and the protective tube (14) is guided along the cooking chamber wall (37) outside the cooking chamber (40).

## Revendications

1. Lampe pour appareil de cuisson (10), en particulier lampe pour fours, fours à micro-ondes ou cuiseurs à vapeur, comprenant
- une source lumineuse (16) sous la forme d'une carte de circuit imprimé (17) sur laquelle est disposée une LED,
- un boîtier lumineux (11) dans lequel est injectée la lumière émise par la LED,
- une tige conductrice de lumière (13) placée entre la source lumineuse (16) et le boîtier lumineux (11) et qui conduit la lumière émise par la LED vers le boîtier lumineux (11),
- un tube de protection (14) qui est également disposé entre le boîtier lumineux (11) et la source lumineuse (16) et qui entoure en la protégeant la tige conductrice de lumière (13),
- un interstice périphérique (36) entre la tige conductrice de lumière (13) et le tube de protection (14), de sorte que la tige conductrice de lumière (13) soit maintenue sans contact avec le tube de protection (14),
- un dispositif de montage (20) qui porte la source lumineuse (16) et maintient une première extrémité du tube de protection (14) ainsi que de la tige conductrice de lumière (13),
- au moins un élément de centrage (15) qui entoure la tige conductrice de lumière (13) et la positionne dans le tube de protection (14) en maintenant l'écartement périphérique (36),
- au moins un moyen de fixation qui fixe le tube de protection (14) et la tige conductrice de lumière (13) sur le boîtier lumineux (11), dans lequel
- l'élément de centrage (15) forme un moyen de fixation au moyen duquel la tige conductrice de lumière (13) est disposée sur le boîtier lumineux (11),
**caractérisé en ce que**
- l'élément de centrage (15) est conçu comme une douille de centrage dans laquelle est logée la tige conductrice de lumière (13),
- le boîtier lumineux (11) présente une ouverture d'insertion (30) qui reçoit l'élément de centrage (15),
- l'élément de centrage (15) constitue également le moyen de fixation du tube de protection (14) sur le boîtier lumineux (11).

2. Lampe pour appareil de cuisson (10) selon la revendication 1, **caractérisée en ce que** l'élément de centrage (15) est un élément d'étanchéité en forme de manchon qui rend étanche la fente périphérique (36) entre la tige conductrice de lumière (13) et le tube de protection (14) par rapport à un espace formé par le boîtier lumineux (11).

3. Lampe pour appareil de cuisson (10) selon la revendication 1, **caractérisée en ce que** l'élément de centrage (15) porte des moyens d'encliquetage (32), en particulier une lèvre périphérique d'encliquetage (33), avec laquelle l'élément de centrage (15) et l'ouverture d'insertion (30) du boîtier lumineux (11) s'encliquettent.

4. Lampe pour appareil de cuisson (10) selon la revendication 1, **caractérisée en ce que** l'élément de centrage (15) forme une paroi annulaire (34) disposée dans le tube de protection (14) pour être fixée sur le boîtier lumineux (11) et qui maintient le tube de protection (14) au moins par friction.

5. Lampe pour appareil de cuisson (10) selon les revendications 3 et 4, **caractérisée en ce que** le moyen d'encliquetage (32) et la paroi annulaire (34) sont disposés à des extrémités opposées de l'élément de centrage (15).

6. Lampe pour appareil de cuisson (10) selon l'une des revendications précédentes, **caractérisée en ce que** le dispositif de montage (20) forme un manchon cylindrique creux (25) dans l'espace cylindrique duquel est maintenue la tige conductrice de lumière (13) et dont la paroi cylindrique est maintenue au moins par friction dans le tube de protection (14).

7. Appareil de cuisson (38) comprenant
- une enceinte de cuisson (40) entouré d'une paroi d'enceinte de cuisson (37),
- une ouverture dans la paroi d'enceinte de cuisson (37) servant à recevoir une lampe d'appareil de cuisson (10),
- une lampe d'appareil de cuisson (10) selon l'une des revendications 1 à 6, **caractérisée en ce que** le boîtier lumineux (11) est disposé au niveau de l'ouverture de la paroi de l'enceinte de cuisson (37) et **en ce que** le tube de protection (14) est guidé à l'extérieur de l'enceinte de cuisson (40) le long de la paroi de l'enceinte de cuisson (37).
